## Europäisches Patentamt

## European Patent Office

## Office européen des brevets

(11) Publication number: **0 042 225**
**B1**

(12) **EUROPEAN PATENT SPECIFICATION**

(45) Date of publication of patent specification: **01.02.84**

(51) Int. Cl.³: **C 01 B 33/28**

(21) Application number: **81302342.1**

(22) Date of filing: **27.05.81**

(54) Zeolite synthesis.

(30) Priority: **12.06.80 GB 8019212**

(43) Date of publication of application:
**23.12.81 Bulletin 81/51**

(45) Publication of the grant of the patent:
**01.02.84 Bulletin 84/5**

(84) Designated Contracting States:
**BE DE FR GB IT NL**

(56) References cited:
**DE - A - 2 924 870**
**GB - A - 1 334 243**
**GB - A - 1 553 209**
**US - A - 3 702 886**

(73) Proprietor: **IMPERIAL CHEMICAL INDUSTRIES PLC**
**Imperial Chemical House Millbank**
**London SW1P 3JF (GB)**

(72) Inventor: **Casci, John Leonello**
**17 Overdale Close**
**Redcar Cleveland (GB)**
Inventor: **Lowe, Barrie Milner**
**20 Lussielaw Road**
**Edinburgh 9 (GB)**
Inventor: **Whittam, Thomas Vincent**
**30 Wilton Drive**
**Darlington Cleveland (GB)**

(74) Representative: **Martin, David Lincoln et al,**
**Imperial Chemical Industries PLC Legal**
**Department: Patents Po Box 6**
**Welwyn Garden City Herts, AL7 1HD (GB)**

Courier Press, Leamington Spa, England.

# Zeolite Synthesis

The present invention relates to an improved process for the preparation of the ZSM—5 family of zeolites

In prior art processes, zeolites of the ZSM—5 type (e.g. ZSM—5 and ZSM—11) have been prepared by crystallising in the presence of very expensive quaternary ammonium compounds, for example tetraethyl or tetrapropyl ammonium compounds (for example as described in British Patent 1,334,243 and US Patent 3,702,886).

More recently, our British Patent 1,553,209 describes an improved method of making ZSM—5 zeolites which involves using inexpensive alcohols instead of quaternary ammonium compounds. The preparation comprises the steps of reacting together at least one source of silica, at least one source of alumina, at least one source of alkali excluding ammonium and phosphonium compounds, and at least one alcohol, the mixture having the composition:

| | |
|---|---|
| $SiO_2/Al_2O_3$ | 20—200 |
| $M_2O/SiO_2$ | 0.2 to 0.25 |
| $OH(R)/Al_2O_3$ | 1 to 100 |
| $H_2O/M_2O$ | 10 to 1000 |

where M is one or more of Li, Na or K, $M_2O$ refers to free alkali as hereinafter defined, OH(R) is a hydroxy group present as an alcohol.

The alcohols included monohydric dihydric or polyhydric, which may be primary, secondary or tertiary and preferably contained 1—20, especially 1—4 carbon atoms per hydroxy group. Specific alcohols exemplified included methanol, ethanol, isopropanol, tert-butanol, triphenyl carbinol, ethylene glycol and glycerol.

When using monohydric alcohols and trihydric alcohols, the ZSM—5 product is generally contaminated with an impurity which is closely related to kenyaite (a sodium polysilicate which occurs naturally in Lake Magadi, see for example H. P. Eugster, Science, *157*, 117 (1967)). The Level of such impurities can be from 5 to 15% of the ZSM—5 product.

We have now found surprisingly that when using certain selected dihydric alcohols, the levels of the kenyaite impurity are much lower thereby yielding purer forms of ZSM—5.

Thus according to the present invention we provide a method of making a zeolite of the ZSM—5 family which comprises reacting an aqueous mixture comprising at least one silica source, at least one alumina source, at least one alkali metal but substantially free of ammonium or phosphonium compounds, and at least one diol, characterized in that the mixture has the composition:

| | |
|---|---|
| $SiO_2/Al_2O_3$ | 20 to 200 |
| $R(OH)_2/Al_2O_3$ | 0.5 to 50 |
| $M_2O/SiO_2$ | 0.02 to 0.25 |
| $H_2O/M_2O$ | 1 to 1000 |

where M is one or more alkali metals, e.g. sodium, or potassium; $M_2O$ refers to free alkali and $R(OH)_2$ is a diol containing from 3 to 20 carbon atoms.

It is preferred to use diols containing from 3 to 8 carbon atoms, and especially 1:6-hexane diol which gives rise to ZSM—5 type products containing substantially no detectable amounts of kenyaite impurity. The use of diols is also advantageous in that they are readily available, low priced materials.

A further advantage of using diols is that much of the organic molecule incorporated during synthesis of the ZSM—5 zeolite can be removed by boiling water or even during simple ion exchange processes. In prior art ZSM—5 containing quaternary ammonium compounds or amines it is necessary to burn out the organic material, or heat in ammonia and burn out carbonaceous residues. These latter processes are expensive and there is a substantial risk of significant thermal damage to the zeolite which will give rise to inferior sorption and catalytic performance.

The term "free alkali" means a hydroxide and/or a salt of an acid such as aluminic or silicic acid that is not stronger than carbonic acid, of the lithium, sodium or potassium. Preferably M is sodium.

The silica source can be any of those commonly considered for use in synthesis zeolites, for example powdered solid silica, silicic acid, colloidal silica or dissolved silica. Among the powdered silicas usable are precipitated silicas, especially those made by precipitation from an alkali metal silicate solution, such as the type known as "KS 300" made by AKZO and similar products, aerosil silicas, fume silicas and silica gels suitably in grades suitable for use as reinforcing pigments for rubber or silicone rubber. Colloidal silicas of various particle sizes may be used, for example 10—15 or 40—50 microns as sold under the Registered Trade Marks "LUDOX" "NALCOAG" and "SYTON". The usable dissolved silicas include commercially available water-glass silicates of sodium and/or potassium containing 0.5 to 6.0, especially 2.0 to 4.0 moles of $SiO_2$ per mol of $Na_2O$ or $K_2O$, "active" alkali metal silicates as defined in UK Patent 1,193,254 and silicates made by dissolving silica in alkali metal hydroxide as a preliminary stage in making the synthesis mixture. The water-glass silicates are preferred on cost grounds as well as for technical performance. A mixture of silicate sources can be used. If desired, an aluminosilicate such as clay or a non-crystalline synthetic aluminosilicate or a zeolite different from that which is to be made by the process can be used as a silica source, but usually an additional silica source is then needed as a result of the relatively low silica to alumina ratios of readily available aluminosilicates.

The alumina source is most conveniently sodium aluminate, but can be aluminium, an aluminium salt, for example the chloride, nitrate or sulphate, an aluminium alkoxide or alumina itself which should preferably be in a hydrated or hydratable form such as colloidal alumina, pseudoboehmite, boehmite, gamma alumina or the alpha or beta trihydrate. Part or all of the alumina can be provided by an aluminosilicate compound as mentioned in relation to the silica source.

If a clay is a constituent of the reaction mixture it can be for example kaolin (especially in the form known as metakaolin made by calcination of kaolin at 500—950°C especially 530—600°C), or one or more of attapulgite, dickite, halloysite, illite and montmorillonite. Other possible aluminosilicate compounds include naturally-occurring zeolites and substances such as nepheline and kalsilite. A de-aluminised aluminosilicate may be used if desired. In assembling the reaction mixture account should be taken of reactants, such as water and alkali metal compounds, introduced as part of the aluminosilicate compound.

The silica to alumina molar ratio of the mixture is preferably 40 to 120.

The reaction mixture may contain also a mineralising agent which is a salt of lithium, sodium or potassium with a strong acid, for example the halides, nitrate or sulphate. Such an agent may be added as such or may be formed in situ, particularly by reaction of an aluminium salt with a hydroxide or weak acid salt of lithium, sodium or potassium or by neutralisation of such hydroxide or weak acid salt with a strong acid. The proportion of mineralising agent is suitably in the range 5 to 100 calculated as moles of monovalent ion or equivalent monovalent ion per mole of $Al_2O_3$. The cation of the mineralising agent should be chosen to be consistent with that of the alkali.

The proportion of diol is suitably in the range 20 to 100 OH-groups per mol of $Al_2O_3$.

The molar composition of the reaction mixture is preferably as follows:

| | |
|---|---|
| $SiO/Al_2O_3$ | 40 to 120 |
| $M_2O/SiO_2$ | 0.10 to 0.25 |
| $R(OH)_2/Al_2O_3$ | 10 to 50 |
| $H_2O/M_2O$ | 10 to 1000 |

The temperature of the reaction can be in the range 80—300°C and is conveniently in the range 150—200°C. The time taken for the reaction depends on inter alia the temperature and on the zeolite that it is intended to make. When the above-mentioned mixture is used the product is a zeolite of the ZSM—5 family when a temperature of 180°C is maintained for 6 days; between 0.5 to 12 days is to be regarded as representative time for temperatures in the range 150—200°C. The mixture can be seeded with intended product, but this does not appear to be necessary.

When the temperature is above boiling point the synthesis is carried out under pressure, which may be autogenous or may be in the presence of non-reactive gas under pressure especially if it is desired to avoid ebullition; generally, however, the reaction is carried out with agitation. The reaction vessel is suitably made of or lined with stainless steel or glass for example "Pyrex" (Registered Trade Mark).

After sufficient formation of the product zeolite has taken place it can be treated further by known steps; for example, the reaction mixture is allowed to cool and the solid phase is collected on a filter, washed and usually dried, unless it is to be subjected to further wet processing steps. The subsequent treatment of the product to give dehydrated or ion-exchanged forms such as ammonium and/or hydrogen and/or other metal forms can be carried out by known procedures.

The product of the synthesis has the general formula typically, ignoring intercalated diol 0.05 to 1.3 $Na_2O : Al_2O_3 : 15$ to 200 $SiO_2 : 0$ to 48 $H_2O$ and an X-ray diffraction pattern characteristic of the ZSM—5 type, and crystallites sizes in the range $5 \times 3 \times 2$ $\mu$m to $10 \times 8 \times 5$ $\mu$m.

The invention is illustrated by the following Examples.

## Example 1

The reaction mixture had the following molar composition: 10 $Na_2O$, 20 $R(OH)_2$, $Al_2O_3$, 60 $SiO_2$, 3000 $H_2O$ 23.2 g Cabosil®/M5 were dispersed in 300 g water. Next, a solution containing 1.5 g sodium aluminate (1.25 $Na_2O$ $Al_2O_3$, 3 $H_2O$), 4.5 g sodium hydroxide, 15.2 g 1,6-hexane diol and 41.7 g water was stirred into the dispersion. The slurry was then reacted at 200°C for 17 hours in a stirred stainless steel 500 ml autoclave. The solid phase was collected on a filter and washed with hot water, and then dried at 120°C for 24 hours. This product was identified from an X-ray diffraction meter trace as a very pure ZSM—5 with no detectable amorphous or crystalline impurities. The crystals were prismatic and of average size $8 \times 5 \times 3$ $\mu$m. In a repeat run which was carried on for 48 hours at 200°C, the product was still a very pure ZSM—5.

## Example 2

This example illustrates the disadvantages of using monohydric alcohols in ZSM—5 synthesis.

112.5 g waterglass ($Na_2O$, 3.4 $SiO_2$, 24 $H_2O$) were dissolved in a mixture of 141 g water and 18.6 g n-pentan-ol to give solution A. Next 3.9 g aluminium sulphate ($Al_2O_3$, 3 $SO_3$, 16 $H_2O$) were dissolved in a mixture of 192 g water and 9.4 g sulphuric acid to give Solution B. Finally solution B was stirred into Solution A (10 minutes) and then reacted with stirring in a stainless steel autoclave at 180°C for 24 hours. The solid phase was filtered, washed and dried as in Example 1. The product was ZSM—5 contaminated with about 20% weight near kenyaite.

### Example 3

This example illustrates that while a dihydric alcohol with carbon number less than 3 yields a purer ZSM—5 than do monohydric alcohols nevertheless, the ZSM—5 is still contaminated with near-kenyaite. Example 2 was repeated except that 13.1 g of ethane diol replaced the n-pentane-1-ol. The product was ZSM—5, which contained about 8% wt near kenyaite as impurity.

### Example 4

This example illustrates the advantage of using the preferred 1,6-hexane diol.

Example 2 was repeated except that 25 g of 1,6-hexane diol replaced the n-pentane-1 ol. The product contained very pure ZSM—5 with no detectable near-kenyaite.

### Example 5

This example illustrates that substituted ethylene glycols are more effective in synthesising kenyaite free ZSM—5 zeolites than is ethylene glycol itself.

The reaction mixture had the following molar composition:
6.67 $K_2O$, 10 Pinacol, $Al_2O_3$, 40 $SiO_2$, 2000 $H_2O$.
22.6 g of Cabosil® M5 were dispersed in 300 g water. Next, a solution containing 4.9 g of potassium aluminate (1.8 $K_2O$, $Al_2O_3$, 18 $H_2O$), 5.2 g potassium hydroxide and 11.1 g tetramethylethylene glycol (pinacol) and 35 g water, was stirred in. The slurry was reacted for 68 hours at 180°C. The procedure was then as in Example 1. The product was ZSM—5 free of near kenyaite impurities.

### Example 6

The reaction mixture had the following molar composition:
20 $Na_2O$, $Al_2O_3$, 20, DMPD, 120 $SiO_2$, 6000 $H_2O$.
23.4 g Cabosil® M5 were dispersed in 300 g water, next a solution containing 0.75 g sodium aluminate, 4.9 g sodium hydroxide and 6.9 g of 2:2-dimethyl-1:3-propane diol and 50 g water was stirred in. The product after 64 hours at 150°C was pure ZSM—5, however on overrunning to 71 hours a significant quantity of ZSM—5 disappeared to be replaced by near kenyaite. It was found that extending the reaction time from 64 hours to 176 hours gave progressive conversion of ZSM—5 to near kenyaite. Thus while reactions involving substituted 1:3 diols can yield pure ZSM—5 the reaction time is more critical than is the case for 1,6-hexane diol.

### Example 7

In this reaction the problems encountered in Example 6 were reduced substantially by using larger quantities of 2,2-dimethyl-1,3-propane diol.

The composition of the reaction mixture was:
10 $Na_2O$, $Al_2O_3$, 30 DMPD, 60 $SiO_2$, 3000 $H_2O$.

The reaction was exactly as Example 1 except that the 1,6-hexane diol was replaced by 20.5 g of 2,2-dimethyl-1,3-propane diol. The product after 68 hours at 150°C was a pure ZSM—5 zeolite. Significant overrun of this reaction did not yield near kenyaite.

### Example 8

From this example it can be seen that it is possible to prepare substantially pure ZSM—5 from 1,12-dodecane diol. However, there is a tendency to produce crystalline silica contaminants as well e.g. tridymite. Such contamination can be minimized by crystallizing at lower temperatures e.g. 150°C.

The reaction mixture composition was 10 $Na_2O$, 20 Dodecane diol, $Al_2O_3$, 60 $SiO_2$, 3000 $H_2O$.

46.4 g KS 300 silica (5.09 $Na_2O$, $Al_2O_3$, 728 $SiO_2$, 248 $H_2O$) was dispersed in 200 g water. Next a solution containing 1.5 g sodium aluminate, 4.5 g sodium hydroxide, 20.5 g 1,12-dodecane diol and 247 g water was stirred in. The slurry was reacted for 17 hours at 200°C and the product was ZSM—5 containing about 10% tridymite.

## Claims

1. A method of making a zeolite of the ZSM—5 family which comprises reacting an aqueous mixture comprising at least one silica source, at least one alumina source, at least one alkali metal but substantially free of ammonium or phosphonium compounds, and at least one diol, characterized in that the mixture has the molar composition:

| | |
|---|---|
| $SiO_2/Al_2O_3$ | 20 to 200 |
| $R(OH)_2/Al_2O_3$ | 0.5 to 50 |
| $M_2O/SiO_2$ | 0.02 to 0.25 |
| $H_2O/M_2O$ | 1 to 1000 |

where M is an alkali metal, $M_2O$ refers to free alkali and $R(OH)_2$ is a diol containing from 3 to 20 carbon atoms.

2. A method according to claim 1 wherein the diol contains from 3 to 8 carbon atoms.

3. A method according to claim 2 wherein the diol is 1,6-hexane diol.

4. A method according to any one of the preceding claims wherein the reaction mixture has the molar composition:

| | |
|---|---|
| $SiO_2/Al_2O_3$ | 40 to 120 |
| $M_2O/SiO_2$ | 0.10 to 0.25 |
| $R(OH)_2/Al_2O_3$ | 10 to 50 |
| $H_2O/M_2O$ | 10 to 1000 |

## Revendications

1. Procédé de préparation d'une zéolite de la famille ZSM—5, qui comprend la réaction d'un mélange aqueux comprenant au moins une source de silice, au moins une source d'alumine, au moins un métal alcalin, mais sensiblement exempt de composés d'ammonium ou de phosphonium, et au moins un diol, caractérisé en ce que le mélange a la composition molaire:

| | |
|---|---|
| $SiO_2/Al_2O_3$ | 20—200 |
| $R(OH)_2/Al_2O_3$ | 0,5 à 50 |
| $M_2O/SiO_2$ | 0,02 à 0,25 |
| $H_2O/M_2O$ | 1 à 1.000 |

où M est un métal alcalin, $M_2O$ représente l'alcali libre et $R(OH)_2$ est un diol comptant 3 à 20 atomes de carbone.

2. Procédé suivant la revendication 1, dans lequel le diol compte 3 à 8 atomes de carbone.

3. Procédé suivant la revendication 2, dans lequel le diol est le 1,6-hexanediol.

4. Procédé suivant l'une quelconque des revendications précédentes, dans lequel le mélange de réaction a la composition molaire:

| | |
|---|---|
| $SiO_2/Al_2O_3$ | 40 à 120 |
| $M_2O/SiO_2$ | 0,10 à 0,25 |
| $R(OH)_2/Al_2O_3$ | 10 à 50 |
| $H_2O/M_2O$ | 10 à 1.000 |

## Patentansprüche

1. Verfahren zur Herstellung eines Zeoliths der ZSM-5-Reihe, bei dem eine wäßrige Mischung, die mindestens eine Siliciumdioxidquelle, mindestens eine Aluminiumoxidquelle, mindestens ein Alkalimetall, das jedoch im wesentlichen frei von Ammonium- oder Phosphoniumverbindungen ist, und mindestens ein Diol enthält, umgesetzt wird, dadurch gekennzeichnet, daß di Mischung die molare Zusammensetzung:

| | |
|---|---|
| $SiO_2/Al_2O_3$ | 20 bis 200 |
| $R(OH)_2/Al_2O_3$ | 0,5 bis 50 |
| $M_2O/SiO_2$ | 0,02 bis 0,25 |
| $H_2O/M_2O$ | 1 bis 1000 |

hat, worin M ein Alkalimetall ist, $M_2O$ freies Alkali betrifft und $R(OH)_2$ ein 3 bis 20 Kohlenstoffatome enthaltendes Diol ist.

2. Verfahren nach Anspruch 1, bei dem das Diol 3 bis 8 Kohlenstoffatome enthält.

3. Verfahren nach Anspruch 2, bei dem das Diol 1,6-Hexandiol ist.

4. Verfahren nach einem der vorhergehenden Ansprüche, bei dem die Reaktionsmischung die molare Zusammensetzung:

| | |
|---|---|
| $SiO_2/Al_2O_3$ | 40 bis 120 |
| $M_2O/SiO_2$ | 0,10 bis 0,25 |
| $R(OH)_2/Al_2O_3$ | 10 bis 50 |
| $H_2O/M_2O$ | 10 bis 1000 |